# FASCICULE DE BREVET EUROPEEN

(11) **EP 2 408 858 B1**
(45) Date de publication et mention de la délivrance du brevet: **27.11.2019**
(21) Numéro de dépôt: 10711647.7
(22) Date de dépôt: 12.03.2010
(51) Int. Cl.: C08L 9/00, C08L 9/06, B60C 1/00

(54) **COMPOSITION DE CAOUTCHOUC POUR BANDE DE ROULEMENT COMPRENANT UN COPOLYMERE THERMOPLASTIQUE STYRENIQUE INSATURE**
KAUTSCHUKZUSAMMENSETZUNG FÜR EINE LAUFFLÄCHE, ENTHALTEND EIN UNGESÄTTIGTES THERMOPLASTISCHES STYROLCOPOLYMER
RUBBER COMPOSITION FOR A TREAD, INCLUDING AN UNSATURATED THERMOPLASTIC STYRENE COPOLYMER

(30) Priorité: 16.03.2009 FR 0951627
(43) Date de publication de la demande: 25.01.2012
(73) Titulaire: Compagnie Générale des Etablissements Michelin, 63000 Clermont-Ferrand (FR)
(72) Inventeur: LOPITAUX, Garance, F-03330 Valignat (FR); VASSEUR, Didier, F-63100 Clermont-Ferrand (FR)
(86) Numéro de dépôt international: PCT/EP2010/053189
(87) Numéro de publication internationale: WO 2010/105984

(56) Documents cités:
- EP-A1- 0 831 121
- EP-A1- 1 757 658
- WO-A1-2005/087859
- US-A- 4 396 743

## Description

La présente invention se rapporte aux compositions de caoutchoucs destinées notamment à la fabrication de pneumatiques ou de produits semi-finis pour pneumatiques ; elle est plus particulièrement relative aux compositions de caoutchouc utilisables dans les bandes de roulement de ces pneumatiques.

Une bande de roulement de pneumatique doit obéir de manière connue à un grand nombre d'exigences techniques, souvent antinomiques, parmi lesquelles une faible résistance au roulement, une résistance élevée à l'usure, ainsi qu'une adhérence élevée sur route sèche comme mouillée.

Ce compromis de propriétés, en particulier du point de vue de la résistance au roulement et de la résistance à l'usure, a pu être amélioré ces dernières années sur les « Pneus Verts » à faible consommation d'énergie, destinés notamment aux véhicules tourisme, grâce notamment à l'emploi de nouvelles compositions de caoutchouc faiblement hystérétiques ayant pour caractéristique d'être renforcées majoritairement de charges inorganiques spécifiques qualifiées de renforçantes, notamment de silices hautement dispersibles dites "HDS" (*Highly Dispersible Silica*), capables de rivaliser, du point de vue du pouvoir renforçant, avec les noirs de carbone conventionnels de grade pneumatique.

L'amélioration des propriétés de résistance à l'usure des bandes de roulement des pneumatiques reste cependant une préoccupation constante des concepteurs de pneumatiques.

Il est connu notamment d'utiliser des copolymères thermoplastiques styréniques (TPS) insaturés dans des bandes de roulement de pneumatiques pour améliorer certaines de leurs propriétés d'usage, en particulier les performances d'adhérence sur sol mouillé, de résistance au roulement et de résistance à l'abrasion, comme décrit par exemple dans les documents US 5756589, EP 0180716 A1 ou EP 0470693 A1.

**Le brevet** US-A-4 396 743 **décrit une composition pour bandes de roulement de pneumatiques comprenant 50 pce d'un copolymère bloc styrène-butadiène qui n'est pas un élastomère thermoplastique, 20 pce de caoutchouc polybutadiène, 30 pce d'un caoutchouc styrène-butadiène et 50 pce de noir de carbone.**

Poursuivant leurs recherches, les Demanderesses ont découvert une composition de caoutchouc spécifique, à base d'un copolymère styrène-butadiène, d'un polybutadiène, d'un copolymère TPS insaturé et d'une charge renforçante qui permet d'obtenir des bandes de roulement de pneumatiques présentant une résistance à l'usure encore améliorée, tout en conservant un excellent niveau d'adhérence sur sol mouillé.

Ainsi, un premier objet de l'invention concerne une composition de caoutchouc comprenant **entre 20 et 90 pce d**'un copolymère styrène-butadiène (SBR), **entre 5 et 60 pce d**'un polybutadiène (BR), **plus de 10 pce et moins de 40 pce d**'un copolymère thermoplastique styrénique (TPS) insaturé **comportant au moins un bloc polystyrène et au moins un bloc polydiène,** une charge renforçante.

L'invention a également pour objet l'utilisation de cette composition de caoutchouc pour la fabrication de pneumatiques ou de produits semi finis pour pneumatiques, en particulier de bandes de roulement de pneumatique, que ces dernières soient destinées à la fabrication de pneumatiques neufs comme au rechapage de pneumatiques usagés.

L'invention a également pour objet une bande de roulement comportant une composition de caoutchouc selon l'invention.

L'invention a également pour objet les pneumatiques eux-mêmes, lorsqu'ils comportent une composition de caoutchouc conforme à l'invention.

Les pneumatiques de l'invention sont particulièrement destinés à équiper des véhicules à moteur de type tourisme, SUV (*"Sport Utility Vehicles"*), deux roues (notamment motos), avions, comme des véhicules industriels choisis parmi camionnettes et "Poids-lourd" c'est-à-dire métro, bus, engins de transport routier (camions, tracteurs, remorques), véhicules hors-la-route tels qu'engins agricoles ou de génie civil, autres véhicules de transport ou de manutention.

L'invention ainsi que ses avantages seront aisément compris à la lumière de la description et des exemples de réalisation qui suivent.

### I - MESURES ET TESTS UTILISES

Les compositions de caoutchouc après cuisson et les pneumatiques sont caractérisées, comme indiqué ci-après.

### 1-1. Essais de traction

Ces essais permettent de déterminer les contraintes d'élasticité et les propriétés à la rupture. Sauf indication différente, ils sont effectués conformément à la norme française NF T 46-002 de septembre 1988. On mesure en seconde élongation (i.e. après un cycle d'accommodation au taux d'extension prévu pour la mesure elle-même) les contraintes à la rupture (en MPa, noté CR) et les allongements à la rupture (en %, noté AR). Toutes ces mesures de traction sont effectuées dans les conditions normales de température (23 ± 2°C) et d'hygrométrie (50 ± 5% d'humidité relative), selon la norme française NF T 40-101 (décembre 1979).

### 1.2 - Dureté shore A

La dureté shore A des compositions après cuisson est appréciée conformément à la norme ASTM D 2240-86.

### 1.3 - Propriétés dynamiques

Les propriétés dynamiques sont mesurées sur un viscoanalyseur (Metravib VA4000), selon la norme ASTM D 5992-96. On enregistre la réponse d'un échantillon de composition vulcanisée (éprouvette cylindrique de 4 mm d'épaisseur et de 400 mm² de section), soumis à une sollicitation sinusoïdale en cisaillement simple alterné, à la fréquence de 10Hz, lors d'un balayage en température, sous une contrainte fixe de 0,7 MPa. On enregistre la valeur de tan(δ) observée à 40°C (soit tan(δ)_{40°C}).

On rappelle que, de manière bien connue de l'homme du métier, la valeur de tan(δ)_{40°C} est représentative de l'hystérèse du matériau donc de la résistance au roulement : plus tan(δ)_{40°C} est faible, plus la résistance au roulement est réduite.

### I.4 - Essais sur pneumatiques

### Résistance à l'usure

On soumet les pneumatiques à un roulage réel sur route, sur un véhicule automobile déterminé, jusqu'à ce que l'usure due au roulage atteigne les témoins d'usure disposés dans les rainures de la bande de roulement. Une valeur supérieure à celle du témoin, arbitrairement fixée à 100, indique un résultat amélioré c'est-à-dire un kilométrage parcouru supérieur.

### Adhérence sur sol mouillé

Pour apprécier les performances d'adhérence sur sol humide, on analyse le comportement des pneumatiques montés sur un véhicule automobile déterminé parcourant, sous des conditions de vitesse limite, un circuit fortement virageux et arrosé de manière à maintenir le sol humide. On mesure le temps minimal nécessaire pour parcourir la totalité du circuit ; une valeur supérieure à celle du témoin, arbitrairement fixée à 100, indique un résultat amélioré c'est-à-dire un temps de parcours plus court.

### II - CONDITIONS DE REALISATION DE L'INVENTION

La composition de caoutchouc selon l'invention comprend **entre 20 et 90 pce d**'un copolymère styrène-butadiène (en abrégé "SBR"), **entre 5 et 60 pce d**'un polybutadiène (en abrégé "BR"), **plus de 10 pce et moins de 40 pce d**'un copolymère thermoplastique styrénique (en abrégé "TPS") insaturé **comportant au moins un bloc polystyrène et au moins un bloc polydiène,** une charge renforçante.

Dans la présente description, sauf indication expresse différente, tous les pourcentages (%) indiqués sont des % en masse. D'autre part, tout intervalle de valeurs désigné par l'expression "entre a et b" représente le domaine de valeurs allant de plus de a à moins de b (c'est-à-dire bornes a et b exclues) tandis que tout intervalle de valeurs désigné par l'expression "de a à b" signifie le domaine de valeurs allant de a jusqu'à b (c'est-à-dire incluant les bornes strictes a et b).

### II.1 - Elastomères diéniques

Par élastomère ou caoutchouc "diénique", on rappelle ici que doit être compris de manière connue un élastomère issu au moins en partie (i.e., un homopolymère ou un copolymère) de monomères diènes (monomères porteurs de deux doubles liaisons carbone-carbone, conjuguées ou non).

La composition de caoutchouc selon l'invention a pour première caractéristique essentielle de comporter, à titre de premier élastomère diénique, un copolymère styrène-butadiène (SBR).

Les copolymères SBR peuvent être par exemple à blocs, statistiques, séquencés, microséquencés, et être préparés en dispersion ou en solution ; ils peuvent être couplés et/ou étoilés ou encore fonctionnalisés avec un agent de couplage et/ou d'étoilage ou de fonctionnalisation. Pour un couplage à du noir de carbone, on peut citer par exemple des groupes fonctionnels comprenant une liaison C-Sn ou des groupes fonctionnels aminés tels que benzophénone par exemple ; pour un couplage à une charge inorganique renforçante telle que silice, on peut citer par exemple des groupes fonctionnels silanol ou polysiloxane ayant une extrémité silanol (tels que décrits par exemple dans US 6 013 718), des groupes alkoxysilanes (tels que décrits par exemple dans US 5 977 238), des groupes carboxyliques (tels que décrits par exemple dans US 6 815 473 ou US 2006/0089445) ou encore des groupes polyéthers (tels que décrits par exemple dans US 6 503 973).

L'élastomère SBR peut être un SBR préparé en émulsion ("ESBR") ou un SBR préparé en solution ("SSBR"). Dans le cas d'un élastomère SBR (ESBR ou SSBR), on utilise notamment un SBR ayant une teneur en styrène moyenne, par exemple comprise entre 20% et 35% en poids, ou une teneur en styrène élevée, par exemple de 35 à 45%, une teneur en liaisons vinyliques de la partie butadiénique comprise entre 15% et 70%, une teneur (% molaire) en liaisons trans-1,4 comprise entre 15% et 75% et une Tg comprise entre - 10°C et - 55°C.

La composition de caoutchouc comprend un taux de SBR compris entre 20 et 90 pce, plus préférentiellement entre 30 et 85 pce et encore plus préférentiellement entre 50 et 80 pce (pce signifiant parties en poids pour cent parties d'élastomère total, donc y compris le copolymère TPS insaturé).

Une seconde caractéristique essentielle de la composition selon l'invention est de comporter à titre de second élastomère diénique un polybutadiène (BR).

Conviennent notamment les polybutadiènes ayant une teneur (% molaire) en unités -1,2 comprise entre 4% et 80% ou ceux ayant une teneur (% molaire) en cis-1,4 supérieure à 80%, plus préférentiellement supérieur à 90 %, notamment supérieur à 95%.

La composition de caoutchouc comprend un taux de BR compris entre 5 et 60 pce, plus préférentiellement dans un domaine de 10 à 50 pce.

### II.2 - Elastomère thermoplastique styrénique insaturé

La composition de caoutchouc selon l'invention a pour autre caractéristique essentielle de comporter un copolymère thermoplastique styrénique (en abrégé "TPS") **insaturé comportant au moins un bloc polystyrène et au moins un bloc polydiène.**

On rappellera tout d'abord que les élastomères thermoplastiques styréniques (dénommés aussi élastomères "TPS") sont des élastomères thermoplastiques se présentant sous la forme de copolymères blocs à base de styrène. De structure intermédiaire entre polymères thermoplastiques et élastomères, ils sont constitués de manière connue de séquences rigides polystyrène reliées par des séquences souples élastomère, par exemple polybutadiène, polyisoprène ou poly(éthylène/butylène). Ce sont souvent des élastomères triblocs avec deux segments rigides reliés par un segment souple. Les segments rigides et souples peuvent être disposés linéairement, en étoile ou branchés. Ces élastomères TPS peuvent être aussi des élastomères diblocs avec un seul segment rigide relié à un segment souple. Typiquement, chacun de ces segments ou blocs contient au minimum plus de 5, généralement plus de 10 unités de base (par exemple unités styrène et unités isoprène pour un copolymère blocs styrène/ isoprène/ styrène).

On rappellera également que doit être entendu par copolymère TPS insaturé un copolymère TPS qui est pourvu d'insaturations éthyléniques, c'est-à-dire comporte des doubles liaisons carbone-carbone (conjuguées ou non). Par copolymère TPS saturé, on entend un copolymère TPS qui ne comporte aucune insaturation éthylénique (i.e., aucune double liaison carbone-carbone).

Selon **l'invention,** le copolymère TPS insaturé est un copolymère comportant au moins un (c'est-à-dire un ou plusieurs) bloc styrène (c'est-à-dire bloc polystyrène) et au moins un (c'est-à-dire un ou plusieurs) bloc diène (c'est-à-dire polydiène), ce bloc polydiène étant **de préférence** un bloc polyisoprène ou polybutadiène.

Selon un mode particulier de réalisation, le TPS est un copolymère dibloc comprenant un bloc polydiène, notamment polybutadiène ou polyisoprène, et un bloc polystyrène ; plus préférentiellement, il est choisi dans le groupe constitué par les copolymères blocs styrène/ butadiène (SB), styrène/ isoprène (SI), et les mélanges de ces copolymères.

Selon un autre mode de réalisation particulier, le TPS est un copolymère comportant au moins 3 blocs, c'est-à-dire au moins un (c'est-à-dire un ou plusieurs) bloc polydiène, notamment polybutadiène ou polyisoprène, disposé entre deux blocs polystyrène ; plus préférentiellement, il est choisi dans le groupe constitué par les copolymères styrène/ butadiène/ styrène (SBS), styrène/ isoprène/ styrène (SIS), styrène/ butadiène/ isoprène/ styrène (SBIS) et les mélanges de ces copolymères.

Plus préférentiellement, cet élastomère TPS, insaturé, est choisi dans le groupe constitué par les copolymères blocs styrène/ butadiène (SB), styrène/ isoprène (SI), styrène/ butadiène/ isoprène (SBI), styrène/ butadiène/ styrène (SBS), styrène/ isoprène/ styrène (SIS), styrène/ butadiène/ isoprène/ styrène (SBIS) et les mélanges de ces copolymères.

Selon un mode de réalisation plus particulier, ledit élastomère thermoplastique est choisi dans le groupe constitué par les copolymères SBS, les copolymères SIS, les copolymères SI et les mélanges de ces copolymères.

Selon un autre mode de réalisation préférentiel de l'invention, le taux de styrène, dans l'élastomère TPS, est compris entre 5 et 50 %. En dessous du minimum indiqué, le caractère thermoplastique de l'élastomère risque de diminuer de manière sensible tandis qu'au-dessus du maximum préconisé, l'élasticité de la composition peut être affectée. Pour ces raisons, le taux de styrène est plus préférentiellement compris entre 10 et 40%, en particulier entre 15 et 35%.

La masse moléculaire moyenne en nombre (notée Mn) de l'élastomère TPS est préférentiellement comprise entre 50 000 et 500 000 g/mol, plus préférentiellement comprise entre 75 000 et 450 000, notamment pour une utilisation de la composition dans une bande de roulement de pneumatique. La masse moléculaire moyenne en nombre (Mn) de l'élastomère TPS est déterminée de manière connue, par chromatographie d'exclusion stérique (SEC). L'échantillon est préalablement solubilisé dans du tétrahydrofuranne à une concentration d'environ 1 g/l ; puis la solution est filtrée sur filtre de porosité 0,45 µm avant injection. L'appareillage utilisé est une chaîne chromatographique "WATERS alliance". Le solvant d'élution est le tétrahydrofuranne, le débit de 0,7 ml/min, la température du système de 35°C et la durée d'analyse de 90 min. On utilise un jeu de quatre colonnes WATERS en série, de dénominations commerciales "STYRAGEL" ("HMW7", "HMW6E" et deux "HT6E"). Le volume injecté de la solution de l'échantillon de polymère est de 100 µl. Le détecteur est un réfractomètre différentiel "WATERS 2410" et son logiciel associé d'exploitation des données chromatographiques est le système "WATERS MILLENIUM". Les masses molaires moyennes calculées sont relatives à une courbe d'étalonnage réalisée avec des étalons de polystyrène.

La composition de caoutchouc comporte **plus de 10 et moins de 40 pce** de copolymère TPS insaturé, par exemple dans un domaine de 15 à 30 pce.

Selon un mode particulièrement préférentiel de réalisation de l'invention, la composition de caoutchouc comporte de 40 à 80 pce de SBR, de 10 à 30 pce de BR et de 10 à 30 pce de TPS.

Des élastomères TPS insaturés tels que par exemple SBS ou SIS, sont bien connus et disponibles commercialement, par exemple auprès de la société Kraton sous la dénomination "Kraton D" (e.g., produits D1161, D1118, D1116, D1163 pour des exemples d'élastomères SIS et SBS), auprès de la société Dynasol sous la dénomination "Calprene" (e.g., produits C405, C411, C412 pour des exemples d'élastomères SBS).

La société Dexco (Dow / Exxonmobil Venture) commercialise par exemple les produits suivants :
- « Vector 8505 » : copolymère SBS ;
- « Vector 4114 » : mélange de copolymères SIS/SI.

### II.3 - Charge renforçante

On peut utiliser tout type de charge renforçante connue pour ses capacités à renforcer une composition de caoutchouc utilisable pour la fabrication de pneumatiques, par exemple une charge organique tel que du noir de carbone, une charge inorganique renforçante telle que de la silice, ou encore un coupage de ces deux types de charge, notamment un coupage de noir de carbone et de silice.

Comme noirs de carbone conviennent tous les noirs de carbone, notamment les noirs du type HAF, ISAF, SAF conventionnellement utilisés dans les pneumatiques (noirs dits de grade pneumatique). Parmi ces derniers, on citera plus particulièrement les noirs de carbone renforçants des séries 100, 200 ou 300 (grades ASTM), comme par exemple les noirs N115, N134, N234, N326, N330, N339, N347, N375, ou encore, selon les applications visées, les noirs de séries plus élevées (par exemple N660, N683, N772). Les noirs de carbone pourraient être par exemple déjà incorporés à un élastomère isoprénique sous la forme d'un masterbatch (voir par exemple demandes WO 97/36724 ou WO 99/16600).

Comme exemples de charges organiques autres que des noirs de carbone, on peut citer les charges organiques de polyvinyle fonctionnalisé telles que décrites dans les demandes WO-A-2006/069792, WO-A-2006/069793, WO-A-2008/003434 et WO-A-2008/003435.

Par "charge inorganique renforçante", doit être entendu dans la présente demande, par définition, toute charge inorganique ou minérale (quelles que soient sa couleur et son origine naturelle ou de synthèse), encore appelée charge "blanche", charge "claire" voire "charge non noire" ("non-black filler") par opposition au noir de carbone, capable de renforcer à elle seule, sans autre moyen qu'un agent de couplage intermédiaire, une composition de caoutchouc destinée à la fabrication de pneumatiques, en d'autres termes apte à remplacer, dans sa fonction de renforcement, un noir de carbone conventionnel de grade pneumatique ; une telle charge se caractérise généralement, de manière connue, par la présence de groupes hydroxyle (-OH) à sa surface.

L'état physique sous lequel se présente la charge inorganique renforçante est indifférent, que ce soit sous forme de poudre, de microperles, de granulés, de billes ou toute autre forme densifiée appropriée. Bien entendu on entend également par charge inorganique renforçante des mélanges de différentes charges inorganiques renforçantes, en particulier de charges siliceuses et/ou alumineuses hautement dispersibles telles que décrites ci-après.

Comme charges inorganiques renforçantes conviennent notamment des charges minérales du type siliceuse, en particulier de la silice (SiO₂), ou du type alumineuse, en particulier de l'alumine (Al₂O₃). La silice utilisée peut être toute silice renforçante connue de l'homme du métier, notamment toute silice précipitée ou pyrogénée présentant une surface BET ainsi qu'une surface spécifique CTAB toutes deux inférieures à 450 m²/g, de préférence de 30 à 400 m²/g. A titres de silices précipitées hautement dispersibles (dites "HDS"), on citera par exemple les silices Ultrasil 7000 et Ultrasil 7005 de la société Degussa, les silices Zeosil 1165MP, 1135MP et 1115MP de la société Rhodia, la silice Hi-Sil EZ150G de la société PPG, les silices Zeopol 8715, 8745 et 8755 de la Société Huber, les silices à haute surface spécifique telles que décrites dans la demande WO 03/16837.

La charge inorganique renforçante utilisée, en particulier s'il s'agit de silice, a de préférence une surface BET comprise entre 45 et 400 m²/g, plus préférentiellement comprise entre 60 et 300 m²/g.

De manière préférentielle, le taux de charge renforçante totale (noir de carbone et/ou charge inorganique renforçante telle que silice) est compris entre 20 et 200 pce, plus préférentiellement entre 30 et 150 pce, l'optimum étant de manière connue différent selon les applications particulières visées : le niveau de renforcement attendu sur un pneumatique vélo, par exemple, est bien sûr inférieur à celui exigé sur un pneumatique apte à rouler à grande vitesse de manière soutenue, par exemple un pneu moto, un pneu pour véhicule de tourisme ou pour véhicule utilitaire tel que Poids lourd.

Selon un mode de réalisation préférentiel de l'invention, on utilise une charge renforçante comportant entre 50 et 120 pce de charge inorganique, particulièrement de silice, et optionnellement du noir de carbone ; le noir de carbone, lorsqu'il est présent, est utilisé de préférence à un taux inférieur à 20 pce, plus préférentiellement inférieur à 10 pce (par exemple entre 0,1 et 10 pce).

Pour coupler la charge inorganique renforçante à l'élastomère diénique, on utilise de manière connue un agent de couplage (ou agent de liaison) au moins bifonctionnel destiné à assurer une connexion suffisante, de nature chimique et/ou physique, entre la charge inorganique (surface de ses particules) et l'élastomère diénique, en particulier des organosilanes ou des polyorganosiloxanes bifonctionnels.

On utilise notamment des silanes polysulfurés, dits "symétriques" ou "asymétriques" selon leur structure particulière, tels que décrits par exemple dans les demandes WO03/002648 (ou US 2005/016651) et WO03/002649 (ou US 2005/016650).

Conviennent en particulier, sans que la définition ci-après soit limitative, des silanes polysulfurés dits "symétriques" répondant à la formule générale (I) suivante:

(I) Z-A-Sₓ-A-Z,

dans laquelle:
- x est un entier de 2 à 8 (de préférence de 2 à 5) ;
- A est un radical hydrocarboné divalent (de préférence des groupements alkylène en C₁-C₁₈ ou des groupements arylène en C₆-C₁₂, plus particulièrement des alkylènes en C₁-C₁₀, notamment en C₁-C₄, en particulier le propylène) ;
- Z répond à l'une des formules ci-après: 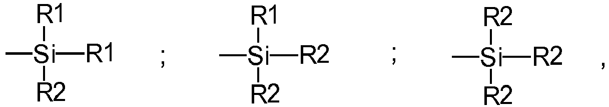 dans lesquelles:
   - les radicaux R¹, substitués ou non substitués, identiques ou différents entre eux, représentent un groupe alkyle en C₁-C₁₈, cycloalkyle en C₅-C₁₈ ou aryle en C₆-C₁₈ (de préférence des groupes alkyle en C₁-C₆, cyclohexyle ou phényle, notamment des groupes alkyle en C₁-C₄, plus particulièrement le méthyle et/ou l'éthyle).
   - les radicaux R², substitués ou non substitués, identiques ou différents entre eux, représentent un groupe alkoxyle en C₁-C₁₈ ou cycloalkoxyle en C₅-C₁₈ (de préférence un groupe choisi parmi alkoxyles en C₁-C₈ et cycloalkoxyles en C₅-C₈, plus préférentiellement encore un groupe choisi parmi alkoxyles en C₁-C₄, en particulier méthoxyle et éthoxyle).

Dans le cas d'un mélange d'alkoxysilanes polysulfurés répondant à la formule (I) ci-dessus, notamment des mélanges usuels disponibles commercialement, la valeur moyenne des "x" est un nombre fractionnaire de préférence compris entre 2 et 5, plus préférentiellement proche de 4. Mais l'invention peut être aussi avantageusement mise en œuvre par exemple avec des alkoxysilanes disulfurés (x = 2).

A titre d'exemples de silanes polysulfurés, on citera plus particulièrement les polysulfures (notamment disulfures, trisulfures ou tétrasulfures) de bis-(alkoxyl(C₁-C₄)-alkyl(C₁-C₄)silyl-alkyl(C₁-C₄)), comme par exemple les polysulfures de bis(3-triméthoxysilylpropyl) ou de bis(3-triéthoxysilylpropyl). Parmi ces composés, on utilise en particulier le tétrasulfure de bis(3-triéthoxysilylpropyl), en abrégé TESPT, de formule [(C₂H₅O)₃Si(CH₂)₃S₂]₂ ou le disulfure de bis-(triéthoxysilylpropyle), en abrégé TESPD, de formule [(C₂H₅O)₃Si(CH₂)₃S]₂. On citera également à titre d'exemples préférentiels les polysulfures (notamment disulfures, trisulfures ou tétrasulfures) de bis-(monoalkoxyl(C₁-C₄)-dialkyl(C₁-C₄)silylpropyl), plus particulièrement le tétrasulfure de bis-monoéthoxydiméthylsilylpropyl tel que décrit dans la demande de brevet WO 02/083782 (ou US 2004/132880).

A titre d'agent de couplage autre qu'alkoxysilane polysulfuré, on citera notamment des POS (polyorganosiloxanes) bifonctionnels ou encore des polysulfures d'hydroxysilane (R² = OH dans la formule I ci-dessus) tels que décrits dans les demandes de brevet WO 02/30939 (ou US 6,774,255) et WO 02/31041 (ou US 2004/051210), ou encore des silanes ou POS porteurs de groupements fonctionnels azo-dicarbonyle, tels que décrits par exemple dans les demandes de brevet WO 2006/125532, WO 2006/125533, WO 2006/125534.

Dans les compositions de caoutchouc conformes à l'invention, la teneur en agent de couplage est préférentiellement comprise entre 4 et 12 pce, plus préférentiellement entre 4 et 8 pce.

L'homme du métier comprendra qu'à titre de charge équivalente de la charge inorganique renforçante décrite dans le présent paragraphe, pourrait être utilisée une charge renforçante d'une autre nature, notamment organique, dès lors que cette charge renforçante serait recouverte d'une couche inorganique telle que silice, ou bien comporterait à sa surface des sites fonctionnels, notamment hydroxyles, nécessitant l'utilisation d'un agent de couplage pour établir la liaison entre la charge et l'élastomère.

### II.4 - Additifs divers

Les compositions de caoutchouc conformes à l'invention comportent également tout ou partie des additifs usuels habituellement utilisés dans les compositions d'élastomères destinées notamment à la fabrication de bandes de roulement, comme par exemple des pigments, des agents de protection tels que cires anti-ozone, anti-ozonants chimiques, anti-oxydants, d'autres agents plastifiants que ceux précités, des agents anti-fatigue, des résines renforçantes, des accepteurs (par exemple résine phénolique novolaque) ou des donneurs de méthylène (par exemple HMT ou H3M), un système de réticulation à base soit de soufre, soit de donneurs de soufre et/ou de peroxyde et/ou de bismaléimides, des accélérateurs de vulcanisation, des activateurs de vulcanisation.

Ces compositions peuvent également contenir, en complément des agents de couplage, des activateurs de couplage, des agents de recouvrement des charges inorganiques ou plus généralement des agents d'aide à la mise en œuvre susceptibles de manière connue, grâce à une amélioration de la dispersion de la charge dans la matrice de caoutchouc et à un abaissement de la viscosité des compositions, d'améliorer leur faculté de mise en œuvre à l'état cru, ces agents étant par exemple des silanes hydrolysables tels que des alkylalkoxysilanes, des polyols, des polyéthers, des amines primaires, secondaires ou tertiaires, des polyorganosiloxanes hydroxylés ou hydrolysables.

Selon un mode de réalisation préférentiel, les compositions de caoutchouc de l'invention comportent en outre un agent plastifiant. De préférence, cet agent plastifiant est une résine hydrocarbonée solide, un plastifiant liquide ou un mélange des deux.

Le taux d'agent plastifiant est préférentiellement compris entre 5 et 50 pce, plus préférentiellement compris entre 10 et 40 pce, par exemple entre 15 et 35 pce.

Selon un mode de réalisation préférentiel de l'invention, cet agent plastifiant est une résine hydrocarbonée dont la Tg est supérieure à 0°C, de préférence supérieure à + 20°C.

De manière connue de l'homme du métier, la dénomination "résine " est réservée dans la présente demande, par définition, à un composé qui est d'une part solide à température ambiante (23°C) (par opposition à un composé plastifiant liquide tel qu'une huile), d'autre part compatible (c'est-à-dire miscible au taux utilisé, typiquement supérieur à 5 pce) avec la composition de caoutchouc à laquelle il est destiné.

De préférence, la résine plastifiante hydrocarbonée présente au moins une quelconque des caractéristiques suivantes :
- une Tg supérieure à 20°C, plus préférentiellement supérieure à 30°C ;
- une masse moléculaire moyenne en nombre (Mn) comprise entre 400 et 2000 g/mol, plus préférentiellement entre 500 et 1500 g/mol ;
- un indice de polymolécularité (Ip) inférieur à 3, plus préférentiellement inférieur à 2 (rappel : Ip = Mw/Mn avec Mw masse moléculaire moyenne en poids).

Plus préférentiellement, cette résine plastifiante hydrocarbonée présente l'ensemble des caractéristiques préférentielles ci-dessus.

La macrostructure (Mw, Mn et Ip) de la résine hydrocarbonée est déterminée par chromatographie d'exclusion stérique (SEC) : solvant tétrahydrofurane ; température 35°C ; concentration 1 g/l ; débit 1 ml/min ; solution filtrée sur filtre de porosité 0,45 µm avant injection ; étalonnage de Moore avec des étalons de polystyrène ; jeu de 3 colonnes "WATERS" en série ("STYRAGEL" HR4E, HR1 et HR0.5) ; détection par réfractomètre différentiel ("WATERS 2410") et son logiciel d'exploitation associé ("WATERS EMPOWER").

Les résines hydrocarbonnées peuvent être aliphatiques ou aromatiques ou encore du type aliphatique/ aromatique c'est-à-dire à base de monomères aliphatiques et/ou aromatiques. Elles peuvent être naturelles ou synthétiques, à base ou non de pétrole (si tel est le cas, connues aussi sous le nom de résines de pétrole). Elles sont préférentiellement exclusivement hydrocarbonées, c'est-à-dire qu'elles ne comportent que des atomes de carbone et d'hydrogène.

Selon un mode de réalisation particulièrement préférentiel, la résine plastifiante hydrocarbonée est choisie dans le groupe constitué par les résines d'homopolymère ou copolymère de cyclopentadiène (en abrégé CPD) ou dicyclopentadiène (en abrégé DCPD), les résines d'homopolymère ou copolymère terpène, les résines d'homopolymère ou copolymère de coupe C5, et les mélanges de ces résines.

Parmi les résines plastifiantes hydrocarbonées ci-dessus, on citera notamment les résines d'homo- ou copolymères d'alphapinène, betapinène, dipentène ou polylimonène, coupe C5, par exemple de copolymère coupe C5/styrène ou de copolymère coupe C5/coupe C9, utilisables seules ou en combinaison avec un plastifiant liquide, par exemple une huile plastifiante telle que MES ou TDAE.

Selon un autre mode de réalisation préférentiel de l'invention, le plastifiant est un plastifiant liquide à 20°C, dit « à basse Tg », c'est-à-dire qui par définition présente une Tg inférieure à - 20 °C, de préférence inférieure à -40°C.

Toute huile d'extension, qu'elle soit de nature aromatique ou non-aromatique, tout agent plastifiant liquide connu pour ses propriétés plastifiantes vis-à-vis d'élastomères diéniques, est utilisable. Conviennent particulièrement les plastifiants liquides choisis dans le groupe constitué par les huiles naphténiques, notamment hydrogénées, les huiles paraffiniques, les huiles MES, les huiles TDAE, les plastifiants esters, éthers, les plastifiants phosphates et sulfonates et les mélanges de ces composés.

Sont particulièrement préférés les composés choisis dans le groupe constitué par les phosphates, les trimellitates, les pyromellitates, les phtalates, les 1,2-cyclohexane dicarboxylates, les adipates, les azélaates, les sébacates, les triesters de glycérol et les mélanges de ces composés.

Selon un mode de réalisation particulièrement préférentiel de l'invention, on utilise à titre de plastifiant liquide à basse Tg un diester d'acide carboxylique répondant à la formule (II) :

R-O-OC-(CH₂)ₙ-CO-O-R

dans laquelle n est compris dans un domaine de 1 à 15 et les radicaux R, identiques ou différents, représentent un radical (ou une chaîne) hydrocarboné(e) quelconque ayant de 1 à 30 atomes de carbone (et pouvant comporter un hétéroatome choisi notamment parmi S, O et N).

De préférence, n est compris dans un domaine de 3 à 10 et les radicaux R représentent un groupe alkyle, linéaire, ramifié ou cyclique, comportant de 4 à 15 atomes de carbone. A titre d'exemples de tels radicaux R préférentiels comportant de 4 à 15 atomes de carbone, on peut citer par exemple les radicaux butoxyéthyle, butoxyéthoxyéthyle, butyle, isobutyle, dibutyle, diisobutyle, benzylbutyle, heptyle, 2-éthylhexyle, benzyloctyle, dioctyle, diisooctyle, isononyle, isodécyle, diisodécyle, tridécyle, octyldécyle. On utilise particulièrement un diester de l'acide adipique (ou adipate, n = 4), de l'acide azélaïque (ou azélaate, n = 7) ou de l'acide sébacique (ou sébacate, n = 8), tout particulièrement un diester de l'acide adipique ou adipate (n = 4 dans la formule (II) ci-dessus).

Parmi les adipates ci-dessus de formule (II), sont plus préférentiellement utilisés ceux répondant à la formule (III) :

H₂ₘ₊₁Cₘ-O-OC-(CH₂)₄-CO-O-CₘH₂ₘ₊₁

dans laquelle m varie de 1 à 30, plus préférentiellement de 4 à 15, en particulier de 7 à 13.

Les adipates préférés de formule (III) sont l'adipate de di-isooctyle (m = 8), l'adipate de di-isononyle (m = 9), l'adipate de di-isodecyle (m = 10) et l'adipate de di-tridécyle (m = 13). Ces adipates sont disponibles commercialement. A titre d'exemples, on peut citer les plastifiants de la série "Jayflex" commercialisés par la société Exxon Mobil, notamment les adipates "Jayflex DIOA" (m = 8), "Jayflex DINA" (m = 9), "Jayflex DIDA" (m = 10), ou encore "Jayflex DTDA" (m = 13). On peut citer, comme autres exemples de ces adipates de formule (III), les plastifiants de la série "Adimoll" de BAYER, "Plasthall" de CP HALL ou encore "Diplast" de LONZA.

Selon un autre mode de réalisation préférentiel de l'invention, on peut utiliser à titre de plastifiant liquide un triester de glycérol. Par triester de glycérol, on entend également un mélange de triesters. Ce triester est de préférence constitué majoritairement (pour plus de 50 %, plus préférentiellement pour plus de 80 % en poids) d'un acide gras insaturé en C₁₈, c'est-à-dire choisi dans le groupe constitué par l'acide oléique, l'acide linoléique, l'acide linolénique et les mélanges de ces acides. Plus préférentiellement, qu'il soit d'origine synthétique ou naturelle (cas par exemple d' huiles végétales de tournesol ou de colza), l'acide gras utilisé est constitué pour plus de 50% en poids, plus préférentiellement encore pour plus de 80% en poids d'acide oléique. De tels triesters (trioléates) à fort taux d'acide oléique sont bien connus, ils ont été décrits par exemple dans la demande WO 02/088238, à titre d'agents plastifiants dans des bandes de roulement pour pneumatiques.

### II.5 - Préparation des compositions de caoutchouc

Les compositions de l'invention, peuvent être fabriquées dans des mélangeurs appropriés, en utilisant deux phases de préparation successives bien connues de l'homme du métier : une première phase de travail ou malaxage thermomécanique (phase dite "non-productive") à haute température, jusqu'à une température maximale comprise entre 110°C et 190°C, de préférence entre 130°C et 180°C, suivie d'une seconde phase de travail mécanique (phase dite "productive") jusqu'à une plus basse température, typiquement inférieure à 110°C, par exemple entre 40°C et 100°C, phase de finition au cours de laquelle est incorporé le système de réticulation.

Le procédé pour préparer de telles compositions comporte par exemple les étapes suivantes :
- incorporer à un copolymère SBR, au cours d'une première étape (dite "non-productive"), un polybutadiène, un copolymère TPS insaturé, une charge renforçante, en malaxant thermomécaniquement le tout (par exemple en une ou plusieurs fois), jusqu'à atteindre une température maximale comprise entre 110°C et 190°C ;
- refroidir l'ensemble à une température inférieure à 100°C ;
- incorporer ensuite, au cours d'une seconde étape (dite "productive"), un système de réticulation ;
- malaxer le tout jusqu'à une température maximale inférieure à 110°C.

A titre d'exemple, la phase non-productive est conduite en une seule étape thermomécanique au cours de laquelle on introduit, dans un mélangeur approprié tel qu'un mélangeur interne usuel, dans un premier temps tous les constituants de base nécessaires (le copolymère SBR, le polybutadiène, le copolymère TPS insaturé, la charge renforçante, l'agent de couplage dans le cas d'une charge inorganique), puis dans un deuxième temps, par exemple après une à deux minutes de malaxage, les autres additifs, éventuels agents de recouvrement de la charge ou de mise en œuvre complémentaires, à l'exception du système de réticulation. La durée totale du malaxage, dans cette phase non-productive, est de préférence comprise entre 1 et 15 min.

Après refroidissement du mélange ainsi obtenu, on incorpore alors dans un mélangeur externe tel qu'un mélangeur à cylindres, maintenu à basse température (par exemple entre 40°C et 100°C), le système de réticulation. L'ensemble est alors mélangé (phase productive) pendant quelques minutes, par exemple entre 2 et 15 min.

Le système de réticulation proprement dit est préférentiellement à base de soufre et d'un accélérateur primaire de vulcanisation, en particulier d'un accélérateur du type sulfénamide. A ce système de vulcanisation viennent s'ajouter, incorporés au cours de la première phase non-productrice et/ou au cours de la phase productive, divers accélérateurs secondaires ou activateurs de vulcanisation connus tels qu'oxyde de zinc, acide stéarique, dérivés guanidiques (en particulier diphénylguanidine), etc. Le taux de soufre est de préférence compris entre 0,5 et 3,0 pce, celui de l'accélérateur primaire est de préférence compris entre 0,5 et 5,0 pce.

On peut utiliser comme accélérateur (primaire ou secondaire) tout composé susceptible d'agir comme accélérateur de vulcanisation des élastomères diéniques en présence de soufre, notamment des accélérateurs du type thiazoles ainsi que leurs dérivés, des accélérateurs de type thiurames, dithiocarbamates de zinc. Ces accélérateurs sont plus préférentiellement choisis dans le groupe constitué par le disulfure de 2-mercaptobenzothiazyle (en abrégé "MBTS"), N-cyclohexyl-2-benzothiazyle sulfénamide (en abrégé "CBS"), N,N-dicyclohexyl-2-benzothiazyle sulfénamide (en abrégé "DCBS"), N-ter-butyl-2-benzothiazyle sulfénamide (en abrégé "TBBS"), N-ter-butyl-2-benzothiazyle sulfénimide (en abrégé "TBSI"), dibenzyldithiocarbamate de zinc (en abrégé "ZBEC") et les mélanges de ces composés. De préférence, on utilise un accélérateur primaire du type sulfénamide.

La composition finale ainsi obtenue peut ensuite être calandrée, par exemple sous la forme d'une feuille, d'une plaque notamment pour une caractérisation au laboratoire, ou encore extrudée, par exemple pour former un profilé de caoutchouc utilisé pour la fabrication d'une bande de roulement.

L'invention concerne les compositions, les pneumatiques et les bandes de roulement de pneumatiques précédemment décrits tant à l'état cru (c'est à dire, avant cuisson) qu'à l'état cuit (c'est à dire, après réticulation ou vulcanisation).

### III - EXEMPLES DE REALISATION DE L'INVENTION

### III.1 - Préparation des compositions

On procède pour les essais qui suivent de la manière suivante : on introduit dans un mélangeur interne (taux de remplissage final : environ 70% en volume), dont la température initiale de cuve est d'environ 60 °C, successivement le copolymère styrène-butadiène, le polybutadiène, le copolymère TPS insaturé, la charge renforçante (silice et noir de carbone), ainsi que les divers autres ingrédients à l'exception du système de vulcanisation. On conduit alors un travail thermomécanique (phase non-productive) en une étape, qui dure au total environ 3 à 4 min, jusqu'à atteindre une température maximale de « tombée » de 165°C.

On récupère le mélange ainsi obtenu, on le refroidit puis on incorpore du soufre et un accélérateur type sulfénamide sur un mélangeur (homo-finisseur) à 30 °C, en mélangeant le tout (phase productive) pendant un temps approprié (par exemple entre 5 et 12 min).

Les compositions ainsi obtenues sont ensuite calandrées soit sous la forme de plaques (épaisseur de 2 à 3 mm) ou de feuilles fines de caoutchouc pour la mesure de leurs propriétés physiques ou mécaniques, soit extrudées sous la forme d'une bande de roulement.

### III.2 - Essais en pneumatiques

Cet essai démontre l'amélioration, en terme de résistance à l'usure d'une bande de roulement comportant une composition conforme à l'invention, comparativement à une bande de roulement témoin.

Pour cela, deux compositions de caoutchouc ont été préparées comme indiqué précédemment, une conforme à l'invention (notée ci-après C.2) et une non-conforme (témoin, notée ci-après C.1).

La composition C.1 est une composition de référence pour l'homme du métier, conventionnellement utilisée pour fabriquer des bandes de roulement de Pneus Verts de véhicules tourisme, à base de SBR et BR.

Dans la composition C.2 selon l'invention comparativement à la composition témoin C.1, 20 pce de SBR ont été remplacés par 20 pce de copolymère TPS (SBS).

Les compositions C.1 et C.2 comprennent toutes deux, un agent plastifiant comportant en combinaison une résine hydrocarbonée (résine polylimonène) et un plastifiant liquide (huile MES).

Leurs formulations (en pce ou parties en poids pour cent parties d'élastomère total, donc y compris le copolymère TPS insaturé), leurs propriétés de caoutchouterie et les résultats des tests de roulage des pneumatiques ont été résumés dans les tableaux 1, 2 et 3 annexés.

On note que les compositions C.1 et C.2 présentent les mêmes niveaux de rigidité (dureté shore A), des valeurs de contrainte à la rupture équivalentes, la composition C.2 selon l'invention présentant en outre un allongement à la rupture amélioré. La composition selon l'invention présente des propriétés dynamiques de même niveau, notamment une valeur de tan(δ)_{40°C} qui est sensiblement égale à celle de la composition témoin C.1, synonyme d'une hystérèse et donc d'une résistance au roulement équivalentes.

Il faut donc en conclure que l'introduction d'un copolymère TPS insaturé dans la composition de l'invention ne modifie pas, de manière sensible, mis à part l'allongement à la rupture, ses propriétés par rapport à la composition témoin C.1.

Ces deux compositions ont été testées comme bandes de roulement de pneumatiques pour véhicule de tourisme, de dimensions 195/65R15, sur un véhicule tourisme de marque RENAULT, modèle LAGUNA, comme indiqué au paragraphe I.4 qui précède.

A la lecture du tableau 3 (résultats en unités relatives, base 100 pour le pneumatique témoin P.1), on constate que le roulage des pneumatiques révèle une amélioration particulièrement notable de la résistance à l'usure de la bande de roulement du pneumatique P2 comportant la composition C.2 selon l'invention comparativement au témoin C.1 (pneu P1), tout en conservant le même excellent niveau d'adhérence sur sol mouillé.

En résumé, les résultats de ces essais démontrent que l'emploi combiné d'un copolymère styrène-butadiène, d'un polybutadiène et d'un copolymère TPS insaturé, permet d'améliorer de manière notable le compromis résistance à l'usure et adhérence sur sol mouillé des bandes de roulement de pneumatiques comportant une composition de caoutchouc selon l'invention.

**Tableau 1**

| Composition n° | C.1 | C.2 |
|---|---|---|
| SBR (1) | 85 | 65 |
| BR (2) | 15 | 15 |
| SBS (3) | - | 20 |
| Silice (4) | 85 | 85 |
| Noir de carbone (5) | 6 | 6 |
| Agent de couplage (6) | 6.8 | 6.8 |
| Plastifiant (7) | 33 | 33 |
| Acide stéarique (8) | 2.0 | 2.0 |
| ZnO (9) | 2.5 | 2.5 |
| Soufre (10) | 1.1 | 1.1 |
| CBS (11) | 2.0 | 2.0 |
| DPG (12) | 1.5 | 1.5 |
| Agent antioxydant (13) | 1.9 | 1.9 |

| | | |
|---|---|---|
| (1) SBR solution (taux exprimé en SBR sec) ; 25% de styrène, 58 % de motifs polybutadiène 1-2 et 22% de motifs polybutadiène 1-4 trans (Tg = - 21°C) ; (2) BR avec 4,3% de 1-2 ; 2,7% de trans ; 93% de cis 1-4 (Tg = - 106°C) ; (3) SBS : « Vector 8505 » de la société Dexco ; (4) silice : « Zeosil 1165 MP » de la société Rhodia, type « HD » - (BET et CTAB : environ 160 m²/g) ; (5) Noir de carbone : N234 (grade ASTM) ; (6) agent de couplage TESTP (« Si69 » de la société Dégussa) ; (7) huile MES (« Catenex SNR » de la société Shell) + résine polylimonène (« Dercolyte L120 de la société DRT) ; (8) stéarine ("Pristerene" de la société Uniquema); (9) oxyde de zinc (grade industriel - société Umicore) ; (10) soufre; (11) N-cyclohexyl-2-benzothiazyl-sulfénamide (Santocure CBS de la société Flexsys) ; (12) DPG = Diphénylguanidine (« Perkacit DPG » de la société Flexsys) ; (13) N-1,3-diméthylbutyl-N-phénylparaphénylènediamine (Santoflex 6-PPD de la société Flexsys). | | |

**Tableau 2**

| Composition n° | C.1 | C.2 |
|---|---|---|
| Shore A | 70 | 70 |
| AR | 469 | 569 |
| CR | 19 | 19,4 |
| Tg(δ)_{40°C} | 0,25 | 0,26 |

**Tableau 3**

| Pneumatique n° | P.1 | P.2 |
|---|---|---|
| Adhérence sur sol mouillé | 100 | 100 |
| Usure | 100 | 111 |

## Revendications

1. Composition de caoutchouc comprenant entre 20 et 90 pce d'un copolymère styrène-butadiène (SBR), entre 5 et 60 pce d'un polybutadiène (BR), plus de 10 pce et moins de 40 pce d'un copolymère thermoplastique styrénique (TPS) insaturé comportant au moins un bloc polystyrène et au moins un bloc polydiène, une charge renforçante.

2. Composition de caoutchouc selon la revendication 1, dans laquelle le taux de SBR est compris entre 30 et 85 pce.

3. Composition de caoutchouc selon l'une quelconque des revendications 1 à 2, dans laquelle le taux de BR est compris entre 10 et 50 pce.

4. Composition de caoutchouc selon l'une quelconque des revendications 1 à 3, dans laquelle le taux de copolymère TPS insaturé est compris dans un domaine de 15 à 30 pce.

5. Composition de caoutchouc selon l'une quelconque des revendications 1 à 4, dans laquelle le bloc polydiène est un bloc polyisoprène ou polybutadiène.

6. Composition de caoutchouc selon la revendication 5, dans laquelle le copolymère TPS insaturé est un copolymère dibloc choisi dans le groupe constitué par les copolymères blocs styrène/ butadiène (SB), styrène/ isoprène (SI), et les mélanges de ces copolymères.

7. Composition de caoutchouc selon la revendication 5, dans laquelle le copolymère TPS insaturé comporte au moins 3 blocs, avec au moins un bloc polydiène disposé entre deux blocs polystyrène.

8. Composition de caoutchouc selon la revendication 7, dans laquelle le TPS est choisi dans le groupe constitué par les copolymères blocs styrène/ butadiène/ styrène (SBS), styrène/ isoprène/ styrène (SIS), styrène/ butadiène/ isoprène/ styrène (SBIS) et les mélanges de ces copolymères.

9. Composition de caoutchouc selon l'une quelconque des revendications 1 à 8, comportant en outre un agent plastifiant, de préférence à un taux compris entre 5 et 50 pce.

10. Composition de caoutchouc selon la revendication 9, dans laquelle l'agent plastifiant est une résine hydrocarbonée dont la Tg est supérieure à 0 °C, de préférence choisie dans le groupe constitué par les résines d'homopolymères ou copolymères de cyclopentadiène ou dicyclopentadiène, les résines d'homopolymères ou copolymère terpène, les résines d'homopolymères ou copolymère de coupe C5, et les mélanges de ces résines.

11. Composition de caoutchouc selon les revendications 9, dans laquelle l'agent plastifiant est un plastifiant liquide à 20°C et dont la Tg est inférieure à -20°C, de préférence choisi dans le groupe constitué par les huiles naphténiques, les huiles paraffiniques, les huiles MES, les huiles TDAE, les plastifiants esters, les plastifiants éthers, les plastifiants phosphates, les plastifiants sulfonates et les mélanges de ces composés.

12. Composition de caoutchouc selon l'une quelconque des revendications 1 à 11, dans laquelle la charge renforçante comporte du noir de carbone, de la silice ou un mélange de noir de carbone et de silice.

13. Pneumatique comportant une composition de caoutchouc selon l'une quelconque des revendications 1 à 12.

14. Bande de roulement de pneumatique comportant une composition de caoutchouc selon l'une quelconque des revendications 1 à 12.

## Patentansprüche

1. Kautschukzusammensetzung, umfassend zwischen 20 und 90 phe eines StyrolButadien-Copolymers (SBR), zwischen 5 und 60 phe eines Polybutadiens (BR), mehr als 10 phe und weniger als 40 phe eines ungesättigten thermoplastischen Styrolcopolymers (TPS) mit mindestens einem Polystyrolblock und mindestens einem Polydienblock und einem verstärkenden Füllstoff.

2. Kautschukzusammensetzung nach Anspruch 1, wobei der SBR-Gehalt zwischen 30 und 85 phe liegt.

3. Kautschukzusammensetzung nach einem der Ansprüche 1 bis 2, wobei der BR-Gehalt zwischen 10 und 50 phe liegt.

4. Kautschukzusammensetzung nach einem der Ansprüche 1 bis 3, wobei der Gehalt an ungesättigtem TPS-Copolymer in einem Bereich von 15 bis 30 phe liegt.

5. Kautschukzusammensetzung nach einem der Ansprüche 1 bis 4, wobei es sich bei dem Polydienblock um einen Polyisopren- oder Polybutadienblock handelt.

6. Kautschukzusammensetzung nach Anspruch 5, wobei es sich bei dem ungesättigten TPS-Copolymer um ein Diblockcopolymer aus der Gruppe bestehend aus Styrol/Butadien(SB)-Blockcopolymeren, Styrol/Isopren(SI)-Blockcopolymeren und Mischungen dieser Copolymere handelt.

7. Kautschukzusammensetzung nach Anspruch 5, wobei das ungesättigte TPS-Copolymer mindestens 3 Blöcke umfasst, wobei mindestens ein Polydienblock zwischen zwei Polystyrolblöcken angeordnet ist.

8. Kautschukzusammensetzung nach Anspruch 7, wobei das TPS aus der Gruppe bestehend aus Styrol/Butadien/Styrol(SBS)-Blockcopolymeren, Styrol/Isopren/Styrol(SIS)-Blockcopolymeren, Styrol/Butadien/Isopren/Styrol(SBIS)-Blockcopolymeren und Mischungen dieser Copolymere ausgewählt ist.

9. Kautschukzusammensetzung nach einem der Ansprüche 1 bis 8, die außerdem einen Weichmacher umfasst, vorzugsweise in einem Gehalt zwischen 5 und 50 phe.

10. Kautschukzusammensetzung nach Anspruch 9, wobei es sich bei dem Weichmacher um ein Kohlenwasserstoffharz mit einer Tg von mehr als 0 °C handelt, das vorzugsweise aus der Gruppe bestehend aus Cyclopentadien- oder Dicyclopentadien-Homopolymer- oder -Copolymerharzen, Terpen-Homopolymer- oder -Copolymerharzen, C5-Schnitt-Homopolymer- oder -Copolymerharzen und Mischungen dieser Harze ausgewählt ist.

11. Kautschukzusammensetzung nach Anspruch 9, wobei es sich bei dem Weichmacher um einen bei 20 °C flüssigen Weichmacher mit einer Tg von weniger als -20 °C handelt, der vorzugsweise aus der Gruppe bestehend aus naphthenischen Ölen, Paraffinölen, MES-Ölen, TDAE-Ölen, Ester-Weichmachern, Ether-Weichmachern, Phosphat-Weichmachern, Sulfonat-Weichmachern und Mischungen dieser Verbindungen ausgewählt ist.

12. Kautschukzusammensetzung nach einem der Ansprüche 1 bis 11, wobei der verstärkende Füllstoff Ruß, Kieselsäure oder eine Mischung von Ruß und Kieselsäure umfasst.

13. Reifen, umfassend eine Kautschukzusammensetzung nach einem der Ansprüche 1 bis 12.

14. Reifenlauffläche, umfassend eine Kautschukzusammensetzung nach einem der Ansprüche 1 bis 12.

## Claims

1. Rubber composition comprising between 20 and 90 phr of a styrene-butadiene copolymer (SBR), between 5 and 60 phr of a polybutadiene (BR), more than 10 phr and less than 40 phr of an unsaturated thermoplastic styrene (TPS) copolymer comprising a polydiene block and a polystyrene block, a reinforcing filler.

2. Rubber composition according to Claim 1, wherein the SBR content is comprised between 30 and 85 phr.

3. Rubber composition according to any one of Claims 1 to 2, wherein the BR content is comprised between 10 to 50 phr.

4. Rubber composition according to any one of Claims 1 to 3, wherein the content of unsaturated TPS copolymer is comprised in a range from 15 to 30 phr.

5. Rubber composition according to any one of Claims 1 to 4, wherein the polydiene block is a polyisoprene or polybutadiene block.

6. Rubber composition according to Claim 5, wherein the unsaturated TPS copolymer is a diblock copolymer chosen from the group consisting of styrene/butadiene (SB) and styrene/isoprene (SI) block copolymers and blends of these copolymers.

7. Rubber composition according to Claim 5, wherein the unsaturated TPS copolymer comprises at least 3 blocks, with at least one polydiene block positioned between two polystyrene blocks.

8. Rubber composition according to Claim 7, wherein the TPS is chosen from the group formed by styrene/butadiene/styrene (SBS), styrene/isoprene/styrene (SIS) and styrene/ butadiene/isoprene/styrene (SBIS) block copolymers and blends of these copolymers.

9. Rubber composition according to any one of Claims 1 to 8, comprising, in addition, a plasticizing agent, preferably at a content comprised between 5 and 50 phr.

10. Rubber composition according to Claim 9, wherein the plasticizing agent is a hydrocarbon-based resin, the Tg of which is above 0°C, preferably chosen from the group consisting of cyclopentadiene or dicyclopentadiene homopolymer or copolymer resins, terpene homopolymer or copolymer resins, C₅ fraction homopolymer or copolymer resins and the mixtures of these resins.

11. Rubber composition according to Claim 9, wherein the plasticizing agent is a plasticizer that is liquid at 20°C, the Tg of which is below -20°C, preferably chosen consisting of naphthenic oils, paraffinic oils, MES oils, TDAE oils, ester plasticizers, ether plasticizers, phosphate plasticizers, sulphonate plasticizers and mixtures of these compounds.

12. Rubber composition according to any one of Claims 1 to 11, wherein the reinforcing filler comprises carbon black, silica or a mixture of carbon black and silica.

13. Tyre comprising a rubber composition according to any one of Claims 1 to 12.

14. Tyre tread comprising a rubber composition according to any one of Claims 1 to 12.
